# EUROPÄISCHE PATENTSCHRIFT

(11) **EP 3 224 830 B1**
(45) Veröffentlichungstag und Bekanntmachung des Hinweises auf die Patenterteilung: **06.06.2018**
(21) Anmeldenummer: 15742206.4
(22) Anmeldetag: 17.07.2015
(51) Int. Cl.: G10L 15/22

(54) **KRAFTFAHRZEUG-GERÄTEBEDIENUNG MIT BEDIENKORREKTUR**
MOTOR VEHICLE DEVICE OPERATION WITH OPERATING CORRECTION
COMMANDE D'UN APPAREIL D'UN VÉHICULE AUTOMOBILE, À CORRECTION DE COMMANDE

(30) Priorität: 24.11.2014 DE 102014017385
(43) Veröffentlichungstag der Anmeldung: 04.10.2017
(73) Patentinhaber: Audi AG, 85045 Ingolstadt (DE)
(72) Erfinder: ENGELHARDT, Doreen, 85049 Ingolstadt (DE); PAULICK, Jana, 85051 Ingolstadt (DE); TELLERMANN, Kerstin, 80992 München (DE); SCHADL, Sarah, 82327 Tutzing / Traubing (DE)
(86) Internationale Anmeldenummer: PCT/EP2015/066404
(87) Internationale Veröffentlichungsnummer: WO 2016/082942

(56) Entgegenhaltungen:
- WO-A1-2009/109169
- US-A1- 2006 287 868

## Beschreibung

Die Erfindung betrifft ein Verfahren zum Betreiben einer Kraftfahrzeug-Bedienvorrichtung, um in Abhängigkeit von einer Sprachsteuerung zumindest zwei aufeinander aufbauende Bedienschritte an einem Gerät des Kraftfahrzeugs auszuführen. Beispielsweise sollen an einem Navigationsgerät beim Eingeben eines Navigationsziels zunächst der Name der Stadt und dann der Name der Straße eingegeben werden können. Zu der Erfindung gehören auch eine Bedienvorrichtung zum Durchführen des Verfahrens sowie ein Kraftfahrzeug mit der erfindungsgemäßen Bedienvorrichtung.

Per Sprache eingegebene Daten, wie beispielsweise der genannte Stadtname, die nicht korrekt vom Spracherkenner erkannt wurden, müssen derzeit über einen zwei-schrittigen Korrekturprozess erneut eingegeben werden. Grund dafür ist, dass eine Spracherkennungseinrichtung in der Regel ein dynamisches Vokabular aufweist, das heißt für jeden Bedienschritt ein eigenes Vokabular bereitstellt, das nur die für diesen Bedienschritt möglichen Sprachkommandos enthält. Hierdurch wird die Spracherkennung robuster.

Bei dynamischem Vokabular handelt es sich häufig um sehr große Datenmengen. Die Erkennung wird jedoch um so genauer, je weniger Daten erkannt werden müssen. Aus diesem Grund wird die Erkennung in den fortlaufenden Dialogschritten reduziert auf die erwarteten Daten aus diesem folgenden Dialogschritt.

Der beschriebene zwei-schrittige Korrekturprozess sieht daher in der Regel vor, dass über ein Sprachkommando, wie "Ändern" oder "Korrektur", der Spracherkennung vermittelt wird, dass die vorangegangene Spracheingabe korrigiert werden soll. Daraufhin wird dem Benutzer über eine Systemausgabe, beispielsweise "Korrektur", zurückgemeldet, dass die initiierte Korrekturphase verstanden wurde. Danach erfolgt per Systemausgabe die Aufforderung an den Benutzer, die Daten erneut einzugeben, zum Beispiel als Sprachausgabe "Bitte nennen Sie die Stadt". Ohne das Kommando "Korrektur" oder "Ändern" wird dagegen die Bedienung beim nächsten Schritt fortgeführt, wobei die Spracherkennungseinrichtung davon ausgeht, dass die Erkennung korrekt war. In diesen fortführenden Bedienschritt ist aber die Erkennung reduziert auf die Sprachkommandos für den zweiten Bedienschritt, wie zum Beispiel Straßennamen. Nennt der Benutzer also einfach noch einmal einen Stadtnamen, so wird dieser auf keinen Fall erkannt.

Möchte der Benutzer also seine Eingabedaten an dieser Stelle korrigieren, ohne ein Kommando, wie "Korrektur" vorher zu sagen und abzuwarten, wird dieses Sprachkommando stets falsch erkannt, da in den neuen Dialogzustand bereits der Erkennungssuchraum nicht mehr für die vorherige Spracheingabe zu Verfügung steht.

Der zwei-schrittige Korrekturprozess ist zeitaufwändig für den Benutzer und lenkt diesen insbesondere während einer Fahrt in unerwünschter Weise vom Fahrgeschehen ab. Hauptsächlich ist es jedoch nicht intuitiv, da in der Mensch-Mensch-Kommunikation Kommandos, wie "Korrektur", nicht genutzt werden. In der US 2006/0287868 A1 wird eine erste Spracheingabe mit einem ersten Vokabular verarbeitet, und eine zweite Spracheingabe wird mit einem zweiten Vokabular verarbeitet. Aus der US 6 128 594 A ist bekannt, erfasste Sprachkommandos zur Überprüfung auszugeben. Der Benutzer kann dann mittels Sprachkommando eine Korrektur des erkannten Sprachergebnisses veranlassen. Hierdurch können einzelne Worte in dem erkannten Sprachergebnis korrigiert werden, bevor das Kommando an einem Gerät ausgeführt wird.

Aus der KR 2004 0035151 A ist ein Verfahren zur Spracherkennung mit einer Ausgabe von erfassten Sprachkommandos erkannt. Der Benutzer kann mittels Betätigung eines Schalters eine Neueingabe bewirken. Wenn das Sprachkommando dann richtig erkannt wurde, kann dann mit der Bedienung des Geräts fortgefahren werden.

Der Erfindung liegt die Aufgabe zugrunde, bei einer Bedienvorrichtung für ein Gerät, das eine Sprachsteuerung mittels dynamischem Vokabular nutzt, den zwei-schrittigen Korrekturprozess bei einer Fehlerkennung zu vermeiden.

Die Aufgabe wird durch die Gegenstände der unabhängigen Patentansprüche gelöst. Vorteilhafte Weiterbildungen der Erfindung sind durch die Merkmale der abhängigen Patentansprüche gelöst.

Erfindungsgemäß bereitgestellt ist ein Verfahren zum Betreiben einer Kraftfahrzeug-Bedienvorrichtung, um in Abhängigkeit von einer Sprachsteuerung zwei aufeinander aufbauende Bedienschritte in einem Gerät des Kraftfahrzeugs auszuführen, also beispielsweise erst die Eingabe eines Städtenamens und dann eines Straßennamens. Bei einer Spracherkennungseinrichtung wird ein erstes Vokabular eingestellt, das für den ersten Bedienschritt vorgesehen ist. In dem beschriebenen Beispiel kann das erste Vokabular also beispielsweise Städtenamen umfassen. Eine andere Bezeichnung für Vokabular ist auch Grammatik des Spracherkenners.

Zu einer ersten Spracheingabe eines Benutzers wird auf Grundlage des eingestellten ersten Vokabulars ein erstes Erkennungsergebnis erzeugt und der erste Bedienschritt in Abhängigkeit von einem ersten Erkennungsergebnis durchgeführt. Beispielsweise wird also bei einem Navigationssystem der erkannte Städtename eingegeben und dem Navigationssystem signalisiert, nun die nächste Abfrage, also diejenige für den Straßennamen, durchzuführen. Bei der Spracherkennungseinrichtung wird dann anstelle des ersten Vokabulars ein von dem ersten Vokabular zumindest teilweise verschiedenes, für den zweiten Bedienschritt vorgesehenes zweites Vokabular eingestellt. In dem Beispiel wären dies also Straßennamen. Des Weiteren wird eine zweite Spracheingabe des Benutzers erfasst.

Durch die Bedienvorrichtung muss nun erkannt werden, ob der Benutzer tatsächlich einen Straßennamen eingeben möchte oder den zuvor erkannten Städtenamen korrigieren möchte. Erfindungsgemäß erkennt hierzu eine Widerholungserkennungseinrichtung bei oder nach dem Erfassen der zweiten Spracheingabe einen Korrekturwunsch des Benutzers. Wird der Korrekturwunsch erkannt, so wird gemäß einem weiteren Schritt des Verfahrens bei dem Gerät der erste Bedienschritt rückgängig gemacht. Der Gerätezustand wird also auf einen vorangegangenen Zustand eingestellt. Des Weiteren wird bei der Spracherkennungseinrichtung wieder das erste Vokabular anstelle des zweiten Vokabulars eingestellt. Dann wird zu zumindest einem Teil der zweiten Spracheingabe auf der Grundlage des wieder eingestellten ersten Vokabulars ein zweites Erkennungsergebnis erzeugt. Der erste Bedienschritt wird dann in Abhängigkeit von dem zweiten Erkennungsergebnis noch einmal durchgeführt.

Durch die Erfindung ergibt sich der Vorteil, dass nun die Korrektur für den ersten Bedienschritt ein einschrittiger Prozess ist, so dass sich hierdurch eine schnellere Korrektur ergibt, die zusammen mit der zweiten Spracheingabe einher geht. Durch die Wiederholungserkennungseinrichtung ist es nicht notwendig, dass der Benutzer zuvor eine Korrektur veranlasst, dann wartet bis die Spracherkennungseinrichtung wieder bereit ist, und erst dann nochmals die erste Spracheingabe, also beispielsweise den Städtenamen, wiederholt.

Falls durch die Wiederholungserkennungseinrichtung kein Korrekturwunsch erkannt wird, also durch die Wiederholungserkennungseinrichtung ein Fortfahrwunsch anstelle eines Korrekturwunsches erkannt wird, so kann das zweite Vokabular beibehalten werden, also eingestellt bleiben. Auf der Grundlage des eingestellten zweiten Vokabulars kann zu der zweiten Spracheingabe ein zweites Erkennungsergebnis erzeugt und der zweite Bedienschritt in Abhängigkeit von dem zweiten Erkennungsergebnis durchgeführt. Beispielsweise wird also der Straßenname in dem Navigationsgerät festgelegt.

Das erfindungsgemäße Verfahren ist besonders vorteilhaft zu verwenden im Zusammenhang mit einem Spracherkennungssystem mit dynamischen Vokabular, bei welchem also jedes Vokabular vom Benutzer nutzbare Sprachkommandos festlegt und hierbei insbesondere in dem zweiten Vokabular Sprachkommandos zum Steuern des ersten Bedienschritts fehlen. Mit anderen Worten kann so die Datenmenge des zweiten Vokabulars gering bleiben, da sie nicht das erste Vokabular umfassen muss.

Zur Erkennung des Korrekturwunsches sieht die Erfindung mehrere Weiterbildungen vor.

In einer Weiterbildung wird durch die Wiederholungserkennungseinrichtung der Korrekturwunsch in Abhängigkeit von einer Sprachäußerung, die der Benutzer an einem Anfang der zweiten Spracheingabe gesprochen hat, erkannt. Mit anderen Worten wird ein einleitendes Korrekturkommando erkannt. Insbesondere werden intuitiv von einem Benutzer verwendete Worte als Korrekturkommando gewertet oder erkannt. Beispiele für eine solche Sprachäußerung sind: "Nein, ...", "Äh ...", "Nein, ich meinte ..." oder "Ich meinte...". Durch Erkennen einer einleitenden Sprachäußerung ergibt sich der Vorteil, dass der Benutzer für die Korrektur den Blick nicht von dem Fahrgeschehen abwenden muss, sondern nur eine einzige zweite Spracheingabe tätigen muss.

In einer anderen Weiterbildung der Erfindung wird durch die Wiederholungserkennungseinrichtung der Korrekturwunsch in Abhängigkeit von einer Sprachpausendauer, die sich vom Durchführen des ersten Bedienschritts bis zum Beginn der zweiten Spracheingabe erstreckt, erkannt. Mit anderen Worten wird ein Zögern des Benutzers als Korrekturwunsch interpretiert.

In einer anderen Weiterbildung wird durch die Wiederholungserkennungseinrichtung der Korrekturwunsch in Abhängigkeit von einem Betätigungssignal eines Betätigungselements, das der Benutzer während der zweiten Spracheingabe betätigt, erkannt. Beispielsweise kann ein Taster bereitgestellt sein, den der Benutzer drückt, während er die zweite Spracheingabe ausspricht. Dies ist eine besonders robuste Ausführungsform zum Erkennen des Korrekturwunsches. Auch hierfür ist eine Blickabwendung nicht nötig.

Wie bereits aufgeführt, erfolgt das Rückgängig-Machen des ersten Bedienschritts und das Wieder-Einstellen des ersten Vokabulars ohne ein Zutun des Nutzers einschrittig durch die Bedienvorrichtung, mit anderen Worten wird die Korrektur und Neueingabe für den ersten Bedienschritt zusammen durchgeführt.

In einer besonders vorteilhaften Ausführungsform wird die Sprachsteuerung der beiden Bedienschritte durch ein Sprachdialogsystem durchgeführt. Zum Wieder-Einstellen des ersten Vokabulars wird bei dem Sprachdialogsystem ein vorheriger Dialogzustand oder Dialogschritt eingestellt. Mit anderen Worten wird ein Dialogschritt rückwärts ausgeführt. Hierdurch ergibt sich der Vorteil, dass automatisch das zu dem Dialogschritt gehörige Vokabular bei der Spracherkennungseinrichtung aktiviert wird. Es muss also die Spracherkennungseinrichtung selbst nicht umgestaltet werden, um das Vokabular umstellen zu können.

Das erfindungsgemäße Verfahren hat sich insbesondere bei den folgenden Geräten bewährt: einem digitalen Adressbuch, einem Navigationsgerät, einem Telefoniesystem. Entsprechende Weiterbildungen der Erfindung sehen vor, dass der erste Bedienschritt und der zweite Bedienschritt betreffen: eine Datenbanksuche in einem Adressbuch oder eine schrittweise Routenplanung für eine Navigationsassistenz oder einen Aufbau einer Telefonverbindung mit einem Telefoniesystem.

Als besonders vorteilhaft hat es sich erwiesen, nach dem Einstellen des zweiten Vokabulars eine Kommandoanzeige darzustellen, welche den Benutzer informiert, wie der Korrekturwunsch zu signalisieren ist. Hierdurch ergibt sich der Vorteil, dass die Bedienvorrichtung selbsterklärend ist.

Zu der Erfindung gehört auch eine Bedienvorrichtung für ein Kraftfahrzeug. Die Bedienvorrichtung weist eine Spracherfassungseinrichtung zum Erfassen einer Spracheingabe eines Benutzers auf. Des Weiteren ist eine Prozessoreinrichtung zum Ausgeben von Steuerkommandos an ein Gerät des Kraftfahrzeugs bereitgestellt. Durch jedes Steuerkommando wird jeweils ein Bedienschritt in dem Gerät durchgeführt. Die Prozessoreinrichtung ist dazu ausgelegt, eine Ausführungsform des erfindungsgemäßen Verfahrens durchzuführen.

Schließlich gehört zu der Erfindung auch ein Kraftfahrzeug, welches eine Ausführungsform der erfindungsgemäßen Bedienvorrichtung aufweist. Das erfindungsgemäße Kraftfahrzeug ist bevorzugt als Kraftwagen, insbesondere als Personenkraftwagen, ausgestaltet.

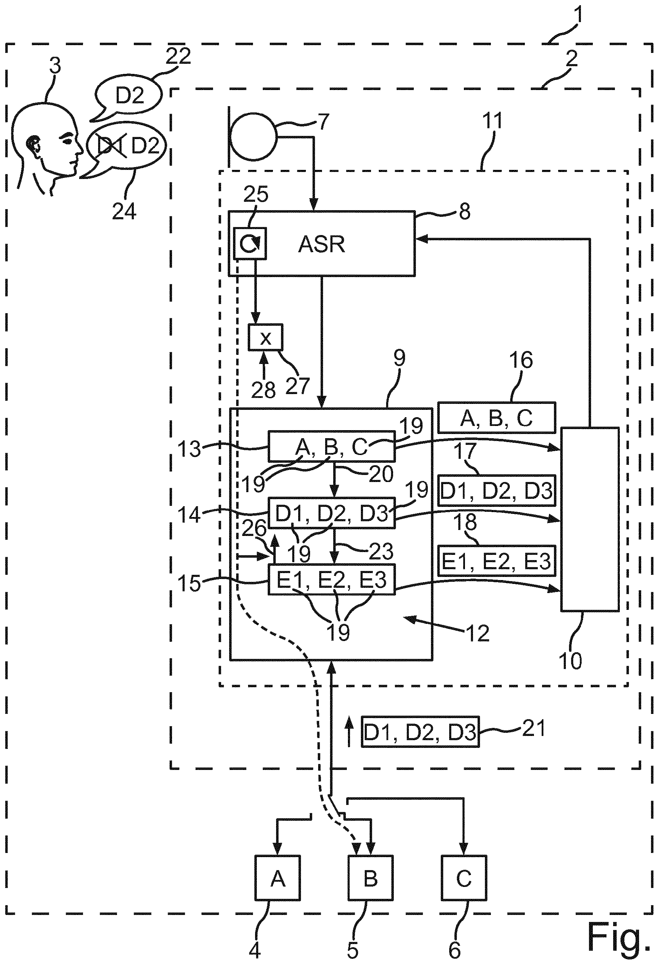

Im Folgenden ist ein Ausführungsbeispiel der Erfindung beschrieben. Hierzu zeigt die einzige Figur (Fig.) in schematischer Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich um einen Kraftwagen, insbesondere einen Personenkraftwagen handeln kann. Das Kraftfahrzeug 1 kann eine Bedienvorrichtung 2 aufweisen, mittels welcher ein Benutzer 3 per Sprachsteuerung eines oder mehrere Geräte 4, 5, 6 bedienen kann. Beispielsweise kann das Gerät 4 ein Telefongerät mit Adressbuch sein, was hier durch die Bezeichnung "A" symbolisiert ist. Das Gerät 5 kann beispielsweise ein Navigationsgerät für eine Navigationsassistenz sein, was durch die Bezeichnung "B" symbolisiert ist. Das Gerät 6 kann beispielsweise ein Medienwiedergabegerät, beispielsweise ein Radio und/oder MP3-Abspielgerät, sein, was in der Figur durch die Bezeichnung "C" symbolisiert ist.

Zur Bedienung eines der Geräte 4, 5, 6 kann der Nutzer 3 beispielsweise den Gerätnamen nennen oder aussprechen, also beispielsweise "A", "B", "C" und dann schrittweise nacheinander einzelne Sprachkommandos aussprechen, um eine bestimmte Funktionalität des Geräts zu aktivieren. In dem Beispiel wird davon ausgegangen, dass der Benutzer 3 das Navigationsgerät auswählt, um dann ein Navigationsziel einzugeben, indem er schrittweise nacheinander als ersten Bedienschritt einen Städtenamen des Navigationsziel in dem Navigationsgerät einstellt und anschließend als zweiten Bedienschritt einen Straßennamen des Navigationsziels in dem Navigationsgerät einstellt.

Für die Sprachbedienung kann die Bedienvorrichtung 2 eine Spracherfassungseinrichtung 7, eine Spracherkennungseinrichtung 8 (ASR - Automatic Speech Recognition - automatische Spracherkennung), ein Sprachdialogsystem 9 und eine Steuereinrichtung 10 aufweisen. Die Spracherfassung 7 kann beispielsweise ein Mikrofon oder mehrere Mikrofone aufweisen. Die Spracherkennungseinrichtung 8 kann beispielsweise durch ein Programmmodul einer Prozessoreinrichtung 11 der Bedienvorrichtung 2 realisiert sein. Es kann auch ermöglicht sein, dass die Spracherkennungseinrichtung 8 die eigentliche Spracherkennung mittels eines fahrzeugexternen Spracherkennungssystems durchführt, mit welchem die Spracherkennungseinrichtung 8 beispielsweise über eine Funkverbindung und über das Internet verbunden sein kann. Das Sprachdialogsystem 9 kann ebenfalls ein Programmmodul der Prozessoreinrichtung 11 sein.

Das Sprachdialogsystem 9 kann beispielsweise einen Sprachdialog 12 mit mehreren Dialogschritten 13, 14, 15 aufweisen. Für jeden Dialogschritt 13, 14, 15 kann ein spezialisiertes Erkennervokabular oder kurz Vokabular 16, 17, 18 vorgesehen sein, in welches jeweils die in den Dialogschritt 13, 14, 15 gültigen oder vorgesehenen oder möglichen Sprachkommandos 19 enthält. Die Spracherkennungseinrichtung 8 wird für jeden Dialogschritt 13, 14, 15 in an sich bekannter Weise durch die Steuereinrichtung 10 dahingehend konfiguriert, dass das jeweils gültige Vokabular 16, 17, 18 eingestellt wird. Hierdurch ist eine robustere und schnellere Spracherkennung ermöglicht. Die Steuereinrichtung 10 kann hierzu als Prozessoreinrichtung und/oder Programmmodul der Prozessoreinrichtung 11 realisiert sein.

In dem Beispiel ist davon ausgegangen, dass der Benutzer 3 zum Festlegen des Navigationsziels zunächst das Navigationsgerät durch Aussprechen der Bezeichnung "B" ausgewählt hat. Der Sprachschall dieser Spracheingabe wurde von der Spracherfassungseinrichtung 7 erfasst und in ein elektrisches und/oder digitales Signal gewandelt, was an die Spracherkennungseinrichtung 8 übertragen wurde, die auf der Grundlage des von der Steuereinrichtung 10 eingestellten Vokabulars 16 die Bezeichnung B erkannt hat und dieses Spracherkennungsergebnis an das Sprachdialogsystem 9 weitergeleitet hat. Durch das Sprachdialogsystem 9 kann dann zwischen den Geräten 4, 5, 6 in der Weise umgeschaltet werden, dass das Sprachdialogsystem 9 mit dem Gerät 5, das heißt dem Navigationsgerät, gekoppelt wird.

Das Sprachdialogsystem 9 hat daraufhin von dem Dialogschritt 13 in einem Vorwärtsschritt 20 von dem Dialogschritt 13 zum Dialogschritt 14 gewechselt. Das Vokabular 17 für den Dialogschritt 14 kann von dem Sprachdialogsystem 9 beispielsweise als Bedienvokabular 21 empfangen worden sein. Beispielsweise kann es sich um Städtenamen D1, D2, D3 handeln.

Das Vokabular 17 kann von dem Sprachdialogsystem 9 der Steuereinrichtung 10 bereitgestellt werden, die daraufhin das Vokabular 16 durch das Vokabular 17 in der Spracherkennungseinrichtung 8 einstellt oder austauscht.

Zum Durchführen des ersten Bedienschritts an dem Gerät 5, das heißt beispielsweise dem Einstellen des Städtenamens im Gerät 5, kann der Benutzer 3 als eine erste Spracheingabe 22 den gewünschten Städtenamen, hier beispielsweise D2, aussprechen. In der beschriebenen Weise wird durch die Spracherfassungseinrichtung 7 die Spracheingabe 22 erfasst und die erfasste Spracheingabe durch die Spracherkennungseinrichtung 8 auf der Grundlage des eingestellten Vokabulars 17 erkannt.

Falls Spracherkennungseinrichtung 8 die erste Spracheingabe 22 erkennt, also hier einen der Städtenamen D1, D2 oder D3, so wird dies als Sprachkommando ausgeführt, das heißt das Sprachdialogsystem 9 kann bei dem Gerät 5 als ersten Bedienschritt den Städtenamen einstellen. Sodann erwartet das Gerät 5 einen zweiten Bedienschritt. Entsprechend wird bei dem Sprachdialogsystem 9 in einem Vorwärtsschritt 23 vom Dialogschritt 14 zum Dialogschritt 15 gewechselt. Für den Dialogschritt 15 kann beispielsweise wieder aus dem Gerät 5 in der beschriebenen Weise ein Bedienvokabular zum Steuern oder zum Durchführen des zweiten Bedienschrittes, also hier dem Einstellen des Straßennamens, empfangen werden. Das Vokabular 18 für den zweiten Bedienschritt kann wieder in der beschriebenen Weise von dem Sprachdialogsystem 9 zur Steuereinrichtung 10 übergeben werden, welche das Vokabular 18 anstelle des Vokabular 17 bei der Spracherkennungseinrichtung 8 einstellt. Nun kann der Benutzer den Straßennamen E1, E2, E3 aussprechen und entsprechend wird in einem zweiten Bedienschritt bei dem Gerät 5 der entsprechende Straßenname eingestellt.

In dem in der Figur veranschaulichten Beispiel wird davon ausgegangen, dass in dem Dialogschritt 14 die Spracheingabe 22 falsch verstanden wird. Beispielsweise wird die Spracherkennungseinrichtung 8 nicht das Sprachkommando für den Städtenamen D2 verstanden, sondern fälschlicherweise der Städtename D1. In den Vorwärtsschritt 23 wird nun ein Vokabular für Städtenamen geladen und durch die Steuereinrichtung 18 in der Spracherkennungseinrichtung 18 eingestellt. In dem Beispiel wird davon ausgegangen, dass der Benutzer 3 nun erkennt, dass der falsche Städtenamen ausgewählt worden ist. Es wurde also ein falscher erster Bedienschritt durchgeführt. Der Benutzer spricht deshalb zur Korrektur noch einmal das Sprachkommando für den ersten Bedienschritt aus und macht aber verbal klar, dass es sich um einen Fehler handelt. Beispielsweise kann er aussprechen: "Nein, ich meine D2." Andere Beispiele sind: "Nein, nicht D1, sondern D2." oder "Nein, D2." oder "Zurück, D2." Diese zweite Spracheingabe 24 wird von der Spracherfassungseinrichtung 7 wieder der Spracherkennungseinrichtung 8 zugeführt. Die Spracherkennungseinrichtung 8 hat zu diesem Zeitpunkt aber bereits das Vokabular 18 für den zweiten Bedienschritt gemäß dem Dialogschritt 15 eingestellt. Darin sind keiner Sprachkommandos für die Städtenamen D1, D2, D3 enthalten, d.h. sie fehlen.

Damit der Korrekturwunsch des Benutzers 3 dennoch erkannt wird, kann die Spracherkennungseinrichtung oder allgemein die Bedienvorrichtung 2 eine Wiederholungserkennungseinrichtung 25 aufweisen. Die Wiederholungserkennungseinrichtung 25 detektiert oder erkennt den Korrekturwunsch des Benutzers 3 und löst deshalb einen Rückschritt 26 im Sprachdialogsystem 9 vom Dialogschritt 15 zum Dialogschritt 14 aus. Damit wird für die Erkennung des Sprachkommandos der Spracheingabe 24 wieder von dem Vokabular 18 zum Vokabular 17 zurück gewechselt.

Die Wiederholungserkennungseinrichtung 25 sorgt auch dafür oder ist auch dafür ausgelegt, bei dem Gerät 5 eine Korrektur vorzunehmen. Bei dem Gerät 5 wird der erste Bedienschritt, hier das Einstellen des Städtenamens, rückgängig gemacht. Beispielsweise kann also der Gerätezustand 5 zurückgesetzt werden. Für das Rückgängigmachen ist jeweils auf die Auslegung des jeweiligen Geräts 4, 5, 6 zu berücksichtigen. Es kann beispielsweise zu jedem Vorwärtsschritt 20, 23 im Dialogsystem 9 ein passender Rückschritt 26 vorgesehen sein und zu jedem Rückschritt ein entsprechendes Steuersignal für das Gerät 4, 5, 6 vorgesehen sein, welches den Vorwärtsschritt 20, 23 rückgängig macht. Dies kann beispielsweise in einer Befehlstabelle abgelegt oder gespeichert sein.

Damit die Wiederholungserkennungseinrichtung 25 erkennt, dass der Benutzer 3 mit der Spracheingabe 24 nicht den zweiten Bedienschritt steuern möchte, also beispielsweise den Straßennamen eingeben möchte, sondern den ersten Bedienschritt korrigieren oder wiederholen möchte, kann die Wiederholungserkennungseinrichtung beispielsweise ein Hilfsvokabular 27 nutzen oder aufweisen, welches eine oder mehrere Sprachäußerungen 28 vorsehen kann, durch welche der Benutzer 3 mit hoher Wahrscheinlichkeit einen Korrekturwunsch signalisiert. Beispiele für ein solches Vokabular 28 können sein: "Nein", "Nein, ich meinte". Wird zu Beginn einer Sprachäußerung in einer Spracheingabe 24 eine solche Sprachäußerung 28 erkannt, so wird dies als Signal für einen Korrekturwunsch durch die Wiederholungserkennungseinrichtung 25 erkannt und in der beschriebenen Weise der erste Bedienschritt rückgängig gemacht und in der Spracherkennungseinrichtung 28 das erste Vokabular 17 zur Wiederholung des ersten Bedienschrittes eingestellt oder aktiviert. So dann kann der verbleibende Teil der Spracheingabe 24, also im Beispiel der wiederholt ausgesprochene Städtename D2, auf Grundlage des Vokabulars 17 erkannt werden.

Wird dann die Spracheingabe 24 richtig erkannt, so wird in der beschriebenen Weise weiter fortgefahren, indem im Vorwärtsschritt 23 der Dialogschritt 15 aktiviert wird und bei dem Gerät 5 der korrekte Städtename D2 eingestellt und damit der erste Bedienschritt erfolgreich durchgeführt wird.

Sodann ist das Gerät 5 wieder bereit, den Straßennamen zu empfangen und die Spracherkennungseinrichtung 8 ist ebenfalls durch das Vokabular 18 auf eine Erkennung eines Straßennamens eingestellt.

Nach einer falsch verstandenen Dateneingabe kann also der Benutzer mit einleitenden Kommandos, wie "Nein, ich meinte" plus die neue Dateneingabe die vorher eingegebenen und falsch verstandenen Daten einschrittig korrigieren. Der Erkenner erkennt dadurch, dass sich die Daten auf den vorherigen Dialogzustand beziehen und öffnet den Suchraum, für den vorherigen Dialogschritt. Durch diesen einschrittigen Prozess ist eine schnellere Korrektur ermöglich. Des Weiteren wird die neue Dateneingabe für den Nutzer wesentlich intuitiver gestaltet.

Durch das vorgelagerte Kommando "Nein, ich meinte..." oder "Ich meinte..." wird dem Erkenner signalisiert, dass der Erkennersuchraum für den vorherigen Schritt geöffnet werden soll. Die zu erkennenden Daten sind nun reduziert auf die Daten vom vorherigen Dialogschritt. Nach dem Kommando "Nein, ich meinte" kann direkt der neue Sprachinhalt eingegeben werden.

Insgesamt zeigt das Beispiel, wie durch die Erfindung eine sofortige Korrektur für Spracheingaben per Sprachbedienung bereitgestellt werden kann.

## Patentansprüche

1. Verfahren zum Betreiben einer Kraftfahrzeug-Bedienvorrichtung (2), um in Abhängigkeit von einer Sprachsteuerung zwei aufeinander aufbauende Bedienschritte an einem Gerät (4, 5, 6) des Kraftfahrzeugs (1) auszuführen, wobei:
- bei einer Spracherkennungseinrichtung (8) ein für den ersten Bedienschritt vorgesehenes erstes Vokabular (17) eingestellt wird und
- auf der Grundlage des eingestellten ersten Vokabulars (17) zu einer ersten Spracheingabe (22) eines Benutzers (3) ein erstes Erkennungsergebnis erzeugt wird und
- der erste Bedienschritt in Abhängigkeit von dem ersten Erkennungsergebnis durchgeführt wird und
- bei der Spracherkennungseinrichtung (8) anstelle des ersten Vokabulars (17) ein von dem ersten Vokabular (17) zumindest teilweise verschiedenes, für den zweiten Bedienschritt vorgesehenes zweites Vokabular (18) eingestellt wird und
- eine zweite Spracheingabe (24) des Benutzers (3) erfasst wird, und eine Wiederholungserkennungseinrichtung (25) bei oder nach dem Erfassen der zweiten Spracheingabe (24) einen Korrekturwunsch des Benutzers (3) erkennt und bei dem Gerät (4, 5, 6) der erste Bedienschritt rückgängig gemacht wird, **dadurch gekennzeichnet, dass** bei der Spracherkennungseinrichtung (8) wieder das erste Vokabular (17) anstelle des zweiten Vokabulars (18) eingestellt wird und zu zumindest einem Teil der zweiten Spracheingabe (24) auf der Grundlage des wieder eingestellten ersten Vokabulars (17) ein zweites Erkennungsergebnis erzeugt wird und der erste Bedienschritt in Abhängigkeit von dem zweiten Erkennungsergebnis noch einmal durchgeführt wird.

2. Verfahren nach Anspruch 1, wobei jedes Vokabular (17, 18) vom Benutzer (3) nutzbare Sprachkommandos (D1, D2, D3, E1, E2, E3) festlegt und in dem zweiten Vokabular (18) Sprachkommandos (D1, D2, D3) zum Steuern des ersten Bedienschritts fehlen.

3. Verfahren nach einem der vorhergehenden Ansprüche, wobei durch die Wiederholungserkennungseinrichtung (25) der Korrekturwunsch in Abhängigkeit von einer Sprachäußerung, die der Benutzer an einem Anfang der zweiten Spracheingabe (24) gesprochenen hat, erkannt wird.

4. Verfahren nach einem der vorhergehenden Ansprüche, wobei durch die Wiederholungserkennungseinrichtung (25) der Korrekturwunsch
- in Abhängigkeit von einer Sprachpausendauer, die sich vom Durchführen des ersten Bedienschritts bis zum Beginn der zweiten Spracheingabe (24) erstreckt, oder
- in Abhängigkeit von einem Betätigungssignal eines Betätigungselements, das der Benutzer (3) während der zweiten Spracheingabe betätigt (24), erkannt wird.

5. Verfahren nach einem der vorhergehenden Ansprüche, wobei das Rückgängig-Machen des ersten Bedienschritts und das Wieder-Einstellen des ersten Vokabulars (17) ohne ein Zutun des Benutzers (3) durch die Bedienvorrichtung durchgeführt werden.

6. Verfahren nach einem der vorhergehenden Ansprüche, wobei die Sprachsteuerung der beiden Bedienschritte durch ein Sprachdialogsystem (9) durchgeführt wird und zum Wieder-Einstellen des ersten Vokabulars (17) bei dem Sprachdialogsystem (9) ein vorheriger Dialogzustand (14) eingestellt wird.

7. Verfahren nach einem der vorhergehenden Ansprüche, wobei der erste Bedienschritt und der zweite Bedienschritt betreffen:
- eine Datenbanksuche in einem Adressbuch oder
- eine schrittweise Routenplanung für eine Navigationsassistenz oder
- einen Aufbau einer Telefonverbindung mit einem Telefoniesystem.

8. Verfahren nach einem der vorhergehenden Ansprüche, wobei nach dem Einstellen des zweiten Vokabulars (18) eine Kommandoanzeige, welche dem Benutzer (3) darstellt, wie der Korrekturwunsch zu signalisieren ist, angezeigt wird.

9. Bedienvorrichtung (2) für ein Kraftfahrzeug (1), aufweisend:
- eine Spracherfassungseinrichtung (7) zum Erfassen einer Spracheingabe (22, 24) eines Benutzers (3),
- eine Prozessoreinrichtung (11) zum Ausgeben von Steuerkommandos an ein Gerät (4, 5, 6) des Kraftfahrzeugs (1), wobei durch jedes Steuerkommando ein vorbestimmter Bedienschritt in dem Gerät (4, 5, 6) durchgeführt wird,
**gekennzeichnet durch**
eine Prozessoreinrichtung (11), welche dazu ausgelegt ist, ein Verfahren nach einem der vorhergehenden Ansprüche durchzuführen.

10. Kraftfahrzeug (1) mit einer Bedienvorrichtung (2) nach Anspruch 9.

## Claims

1. Method for operating a motor vehicle operating device (2) in order to carry out, depending on a speech control, two operating steps which are based on each other in a device (4, 5, 6) of a motor vehicle (1), wherein:
- a first vocabulary (17) provided for the first operating step is set in a speech recognition device (8) and
- on the basis of the set first vocabulary (17), a first recognition result is generated for a first speech input (22) of a user (3),
- the first operating step is carried out depending on the first recognition result and
- instead of the first vocabulary (17), a second vocabulary (18) provided for the second operating step, which is at least partially different from the first vocabulary (17), is set in the speech recognition device (8) and
- a second speech input (24) of the user (3) is detected,
and
a repetition recognition device (25) recognises a correction request of the user (3) when or after the second speech input (24) is detected and reverses the first operating step in the device (4, 5, 6), **characterised in that**
in the speech recognition device (8), the first vocabulary (17) is set again instead of the second vocabulary (18), and for at least a part of the second speech input (24), a second recognition result is generated on the basis of the first vocabulary (17) which is set again, and the first operating step is carried out one more time depending on the second recognition result.

2. Method according to claim 1, wherein each vocabulary (17, 18) defines speech commands (D1, D2, D3, E1, E2, E3) which can be used by the user (3) and the second vocabulary (18) lacks speech commands (D1, D2, D3) for controlling the first operating step.

3. Method according to any of the preceding claims, wherein the repetition recognition device (25) recognises the correction request depending on a speech utterance which the user has spoken at a beginning of the second speech input (24).

4. Method according to any of the preceding claims, wherein the repetition recognition device (25) recognises the correction request
- depending on the duration of a speech pause which lasts from when a first operating step is carried out to the beginning of the second speech input (24), or
- depending on an actuation signal of an actuating element which the user (3) actuates during the second speech input (24).

5. Method according to any of the preceding claims, wherein the reversal of the first operating step and the setting again of the first vocabulary (17) are carried out by the operating device without any action by the user (3).

6. Method according to any of the preceding claims, wherein the speech control over both operating steps is carried out by a speech dialogue system (9) and a previous dialogue state (14) is set for setting the first vocabulary (17) again in the speech dialogue system (9).

7. Method according to any of the preceding claims, wherein the first operating step and the second operating step relate to:
- a database search in an address book, or
- step-by-step route planning for navigation assistance, or
- establishing a telephone connection with a telephony system.

8. Method according to any of the preceding claims, wherein after the second vocabulary (18) is set, a command display is displayed which shows the user (3) how to indicate the correction request is.

9. Operating device (2) for a motor vehicle (1), comprising:
- a speech detection device (7) for detecting a speech input (22, 24) of a user (3),
- a processor device (11) for issuing control commands to a device (4, 5, 6) of the motor vehicle (1), wherein each control command carries out a predetermined operating step in the device (4, 5, 6),
**characterised by**
a processor device (11) which is designed to carry out a method according to any of the preceding claims.

10. Motor vehicle (1) having an operating device (2) according to claim 9.

## Revendications

1. Procédé de fonctionnement d'un dispositif de commande de véhicule automobile (2), dans le but d'exécuter en fonction d'une commande vocale deux étapes de commande s'appuyant l'une sur l'autre au niveau d'un appareil (4, 5, 6) du véhicule automobile (1), dans lequel
- dans un dispositif de reconnaissance vocale (8), un premier vocabulaire (17) prévu pour la première étape de commande est réglé et
- sur la base du premier vocabulaire (17) réglé, un premier résultat de reconnaissance est produit pour une première entrée vocale (22) d'un utilisateur (3) et
- la première étape de commande est effectuée en fonction du premier résultat de reconnaissance et
- dans le dispositif de reconnaissance vocale (8), à la place du premier vocabulaire (17), un deuxième vocabulaire (18) prévu pour la deuxième étape de commande et au moins partiellement différent du premier vocabulaire (17) est réglé et
- une deuxième entrée vocale (24) de l'utilisateur (3) est acquise et
pendant ou après l'acquisition de la deuxième entrée vocale (24), un dispositif de reconnaissance de répétition (25) reconnaît un souhait de correction de l'utilisateur (3) et la première étape de commande est annulée au niveau du premier appareil (4, 5, 6),
**caractérisé en ce que**, dans le dispositif de reconnaissance vocale (8), le premier vocabulaire (17) est à nouveau réglé à la place du deuxième vocabulaire (18) et un deuxième résultat de reconnaissance est produit pour au moins une partie de la deuxième entrée vocale (24) sur la base du premier vocabulaire (17) à nouveau réglé et la première étape de commande est une nouvelle fois effectuée en fonction du deuxième résultat de reconnaissance.

2. Procédé selon la revendication 1, dans lequel chaque vocabulaire (17, 18) spécifie des instructions vocales (D1, D2, D3, E1, E2, E3) utilisables par l'utilisateur (3) et des instructions vocales (D1, D2, D3) destinées à commander la première étape de commande sont absentes du deuxième vocabulaire (18).

3. Procédé selon l'une quelconque des revendications précédentes, dans lequel le souhait de correction est reconnu par le dispositif de reconnaissance de répétition (25) en fonction d'une expression vocale que l'utilisateur a prononcé au début de la deuxième entrée vocale (24).

4. Procédé selon l'une des revendications précédentes, dans lequel le souhait de correction est reconnu par le dispositif de reconnaissance de répétition (25)
- en fonction d'une durée de pause vocale qui s'étend de l'exécution de la première étape de commande au début de la deuxième entrée vocale (24) ou
- en fonction d'un signal d'actionnement d'un élément d'actionnement que l'utilisateur (3) actionne pendant la deuxième entrée vocale (24).

5. Procédé selon l'une quelconque des revendications précédentes, dans lequel l'annulation de la première étape de commande et le nouveau réglage du premier vocabulaire (17) sont effectués par le dispositif de commande sans intervention de l'utilisateur (3).

6. Procédé selon l'une quelconque des revendications précédentes, dans lequel la commande vocale des deux étapes de commande est effectuée par un système de dialogue vocal (9) et, afin d'effectuer un nouveau réglage du premier vocabulaire (17), un état de dialogue antérieur (14) est réglé dans le système de dialogue vocal (9).

7. Procédé selon l'une quelconque des revendications précédentes, dans lequel la première étape de commande et la deuxième étape de commande concernent :
- une recherche de base de données dans un répertoire ou
- une planification d'itinéraire pas à pas pour un assistant de navigation ou
- un établissement d'une liaison téléphonique avec un système téléphonique.

8. Procédé selon l'une quelconque des revendications précédentes, dans lequel, après le réglage du deuxième vocabulaire (18), un affichage d'instruction qui présente à l'utilisateur (3) comment le souhait de correction doit être signalé est affiché.

9. Dispositif de commande (2) pour un véhicule automobile (1), comportant :
- un dispositif d'acquisition de paroles (7) destiné à acquérir une entrée vocale (22, 24) de l'utilisateur (3),
- un dispositif processeur (11) destiné à fournir des instructions de commande à un appareil (4, 5, 6) du véhicule automobile (1), une étape de commande prédéterminée étant exécutée dans l'appareil (4, 5, 6) par chaque instruction de commande,
**caractérisé par** un dispositif processeur (11) qui est conçu pour mettre en oeuvre un procédé selon l'une quelconque des revendications précédentes.

10. Véhicule automobile (1) avec un dispositif de commande (2) selon la revendication 9.
